# EUROPEAN PATENT SPECIFICATION

(11) **EP 1 641 613 B1**
(45) Date of publication and mention of the grant of the patent: **25.05.2011**
(21) Application number: 04736899.8
(22) Date of filing: 16.06.2004
(51) Int. Cl.: B29D 23/00

(54) **PIPE-CORRUGATING EQUIPMENT**
Ausrüstung zum Herstellen von gewellten Rohren
MATERIEL POUR FAIRE DES TUBES ONDULES

(30) Priority: 17.06.2003 BR 0302287
(43) Date of publication of application: 05.04.2006
(73) Proprietor: SPIRA, Vlado, 01251-010 Sao Paulo (BR)
(72) Inventor: SPIRA, Vlado, 01251-010 Sao Paulo (BR)
(74) Representative: Nuss, Pierre
(86) International application number: PCT/BR2004/000092
(87) International publication number: WO 2004/110734

(56) References cited:
- EP-A1- 0 055 494
- FR-A1- 2 397 934
- JP-A- 2000 104 867

## Description

This report refers to an invention patent that deals with an improvement introduced in pipe-corrugating equipment, said equipment being characterized, among other aspects, by the possession of a head block with a coaxial extrusion head, which allows the guide wire (produced in the most varied materials) to be passed through the corrugated pipe's interior during the pipe's production.

EP-A2-0420019 which constitutes the nearest prior art comprises pipe-corrugating equipment that operates with an extruded pipe that is produced by an extruder and immediately fed into a molding board.

The molding board used in the conventional equipment is characterized by several constructive solutions, one of which is a mechanical arrangement in which two series of molding blocks are provided.

The totality of each series' molding block describe a motion in a closed circuit, this motion being fully synchronized with the motion of the other series of blocks.

Both series of blocks are arranged in such a way that during part of these contrary motions at a certain section, a given number of blocks of a series is aligned and juxtaposed with a corresponding number of blocks from the other series, thus forming, during this motion section, a molding chamber, according to the preamble of claim 1.

In this type of equipment, the turning speed of the two series of molding blocks must be exactly equal to the speed in which the plastic pipe is extruded, that is, there must be no axial relative motion between the pipe being produced and the blocks that form the molding chamber around it.

The corrugated configuration that the pipe must present at the end is obtained from the contact with the recently extruded pipe while still hot from contact with the inner surface of the molding blocks.

The inner surface of each of the molding blocks presents a corrugated standard, which is complemented continuously by the other molding blocks of the same series as well as by the molding blocks from the other series.

Another type of molding board uses two superimposed alignments of molding blocks, being that there are blocks arranged below and blocks arranged above along the trajectory of the block's molding.

There is also another type of molding board that uses a single circuit of molding blocks, in which each block comprises two halves so to speak mutually connected and articulated through hinges. In this type of configuration, the molding blocks have their two halves closed to form a structure in which the extruded pipe will be formed, and on reaching a certain point of this trajectory, and after the pipe has been formed, the two halves of each block are opened.

Generally, the molding blocks of conventional equipment operate by vacuum, that is, they create a low pressure in the region of the surface that comes in contact with the plastic pipe's outer wall, causing the pipe's material, while still hot, to follow the corrugated relief of said surface.

On reaching the end of the region where the molding chamber is located, the blocks of each series are mutually separated, thus disassembling said chamber; at this point, the plastic pipe must have been sufficiently cooled to maintain the corrugated format imposed by the contact with the molding blocks.

The use of vacuum as a way of forcing the recently extruded pipe to come in contact with the molding blocks presents a large number of inconveniences, which are normally related to the high cost of said technical solution, and the fact that the vacuum condition has to be imposed between the molding blocks in relation to the pipe being formed, as well as, and especially, in relation to the blocks themselves.

In other words, the molding blocks must be perfectly juxtaposed so as to obtain a perfect hermetic condition, thus preventing the entrance of air into the system.

In practice, it is not always possible to obtain the hermetic condition since any imperfection in the molding blocks can contribute toward creating an air inlet that ends up impairing the vacuum effect.

With respect to the extrusion head, the conventional equipment do not allow the inclusion of a guide wire in the pipe's production process, and this fact prevents the pipe from being sold with said item.

The guide wire has special utility when the pipe is sold in large lengths, and is used as a channel for the passage of various wires and cables.

Generally, the equipment belonging to prior art also present limitations with respect to the means used to cool the plastic pipe in the stage in which the pipe must remain in contact with the molding blocks that form the molding chamber.

With the aim of improving said type of equipment, the Applicant developed the equipment illustrated and described in document BR-A-0106493.

In the corrugated equipment described in the above document BR-A-0106493, a new cooling system for the molding blocks was introduced, which increased the efficiency of these block's operation in relation to printing its corrugated profile on the recently extruded plastic pipe.

The above equipment also has a mechanical arrangement formed by two series of molding blocks, interconnected by a conventional traction system that can impose the circular motion in motorized gears with corresponding support gears.

The pipes produced by the abovementioned equipment can have various diameters and lengths, and can be used in several applications, such as, pipe used in soil drainage systems, or underground channels for the passage of various cables.

Specifically regarding this last use, the passage of cables through long pipes presents a relative difficulty because, before passing the cables, a guide wire must be passed that will serve as a means for pulling the cables so to speak.

In the case in which the length of the corrugated pipe is too long, the passing of the guide wire is a complicated task that usually demands a considerable time for its realization.

In view of this prior art, the Applicant developed an improvement according to which the guide wire, in the form of a wire, follows the corrugated pipe while is it being produced, according to the characterizing part of claim 1.

Said objective enabled the equipment's improvement for the manufacturing of said pipe, and more specifically, in the head block of the extruder that operates with the equipment.

The abovementioned objective also required other modifications and improvements that led to the determination of deep modifications in the equipment's cooling system, as well as in the system that acts to determine the contact with the still heated plastic pipe with the inner surface of the molding blocks.

In view of the above prior art, the pipe-corrugating equipment object of this patent was developed, which will be described in detail with reference to the drawings listed below, in which:

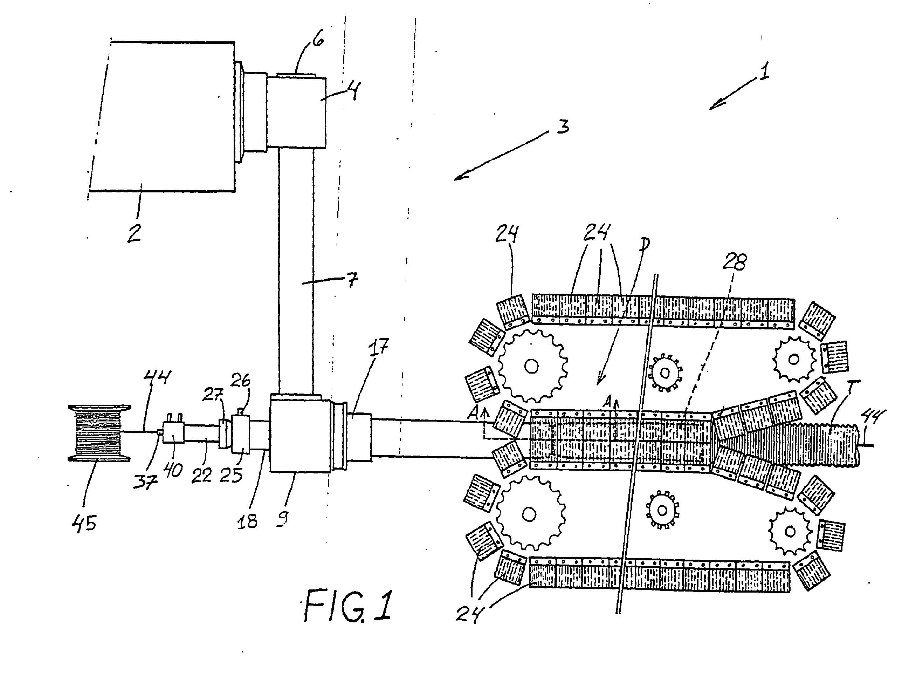

- figure 1: shows a general and schematic view of the corrugating equipment;

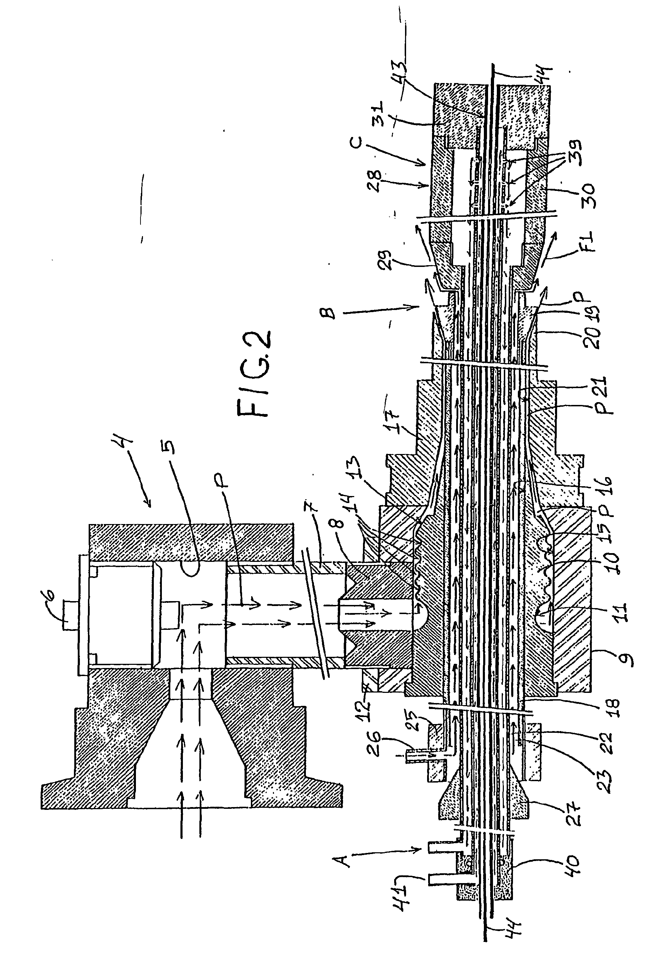

- figure 2: shows the main part of the equipment in magnified scale and full section;

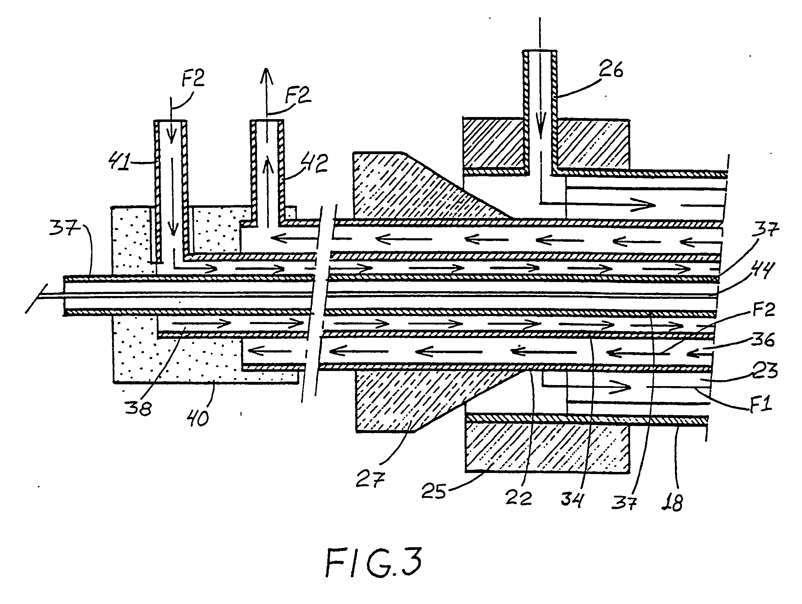

- figure 3: shows a magnified detail from figure 1, indicated by arrow A;

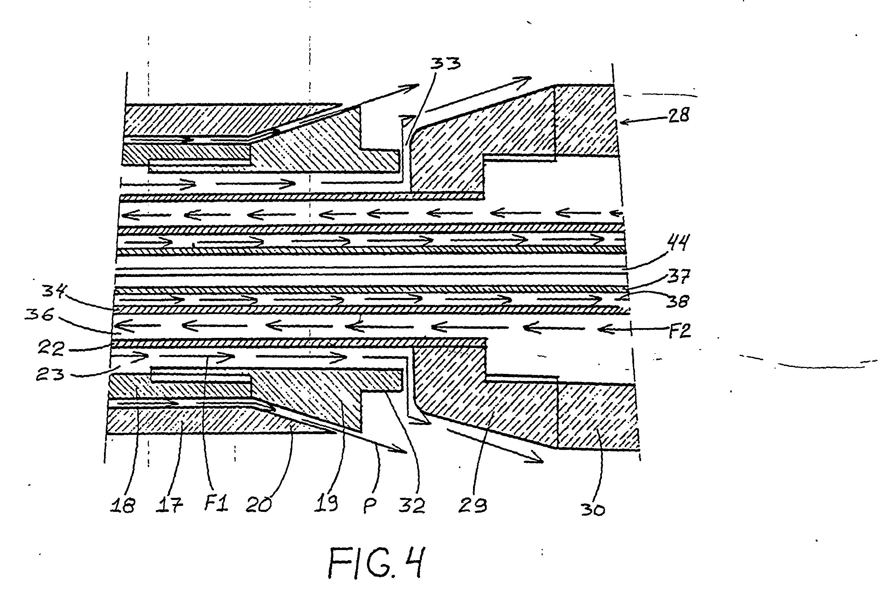

- figure 4: shows a magnified detail from figure 2, indicated by arrow B;

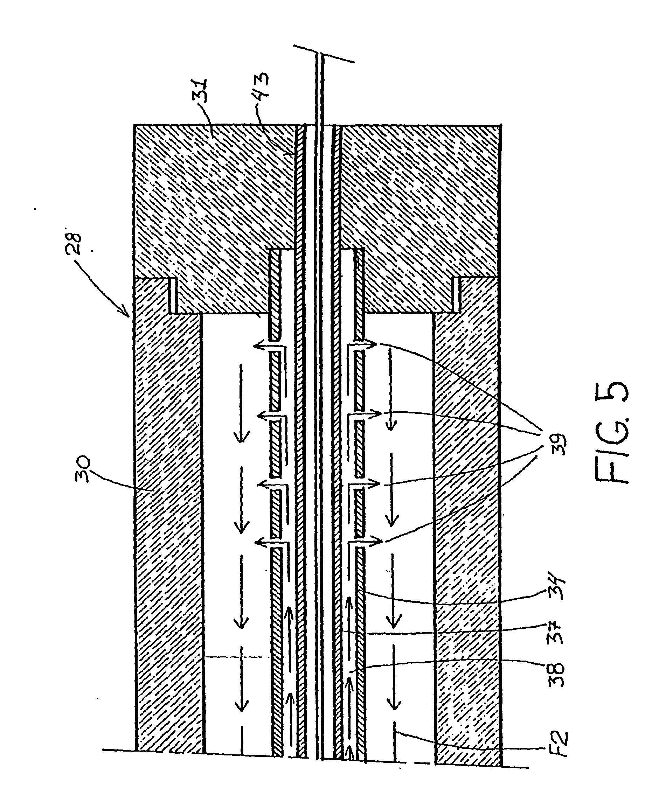

- figure 5: shows a magnified detail form figure 2, indicated by arrow C;
- figure 6: shows a schematic section taken along section A-A of figure 1, this magnified-detail being from the region indicated by arrow D;
- figure 7: shows a view that complements the view shown in figure 6; and
- figure 8: shows a view of the device called torpedo, which is part of the equipment.

According to the illustrations by the above listed figures, the improvement introduced in the pipe-corrugating equipment object of this patent is characterized by the fact of its incorporating a corrugating equipment 1, and more specifically an extruder 2 that is part of the corrugating equipment 1, and a coaxial extrusion head block 3.

The coaxial extrusion head block 3 is assembled from frontal head 4, which has a transversal channel 5 that receives a closed component 6 on one end and the flow deviation pipe 7 on the other end.

The opposite end of the flow deviation pipe 7 receives the assembly of a filter guide cone 8, which is duly assembled on the lateral head 9 of the coaxial extrusion head block 3.

The lateral head 9 receives the assembly of a strangling cone 10, this component being duly aligned with the longitudinal geometrical axis of the equipment as a whole.

The strangling cone 10 has a ring shoulder 11 that stays aligned with the channel 12 of the filter guide cone 8 such that the flow of the plastic material P coming from extruder 2 and that first passes through the frontal head 4 and then through the flow deviation pipe 7, envelopes said strangling cone 10 in an essentially tubular form.

The strangling cone 10, from the ring shoulder 11 and in direction of flow P of the extruded plastic material, incorporates a passage region formed by a series of ring shoulders 14; said passage region 13 keeps a constant distance in relation to the inner wall of the cavity 15 of the lateral head 9, through which the plastic flow p passes.

The strangling cone 10 incorporates a frontal projection 16, which extends inwards toward the female block 17, also maintaining a constant distance in relation to the channel of said component that allows the passage of plastic flow P.

The strangling cone 10 receives the close-fitting assembly of a first axial pipe 18, whose front end exceeds the strangling cone 10, passes inside the female block 17 and finally receives the assembly of a thickness-regulating component 19.

The thickness-regulating component 19, in conjunction with the outlet mouthpiece 20 at the end of the female block 17, determines the thickness that the plastic tubular flow P will have; this thickness is determined by the closeness or distance of the thickness-regulating component 19 in relation to said outlet mouthpiece 20.

Next, the plastic tubular flow P is forced in the direction of the region in which the molding blocks 24 are aligned. This alignment determines the creation of a molding chamber M that will form the extruded pipe T.

Also with respect to the strangling cone 10, the first axial pipe 18 is assembled in such a way that a distance is maintained from the front end of the strangling cone 10 in relation to the axial channel 21 of the female block 17.

The first axial pipe 18 receives a second axial pipe 22 in its interior, which is dimensioned in such a way as to maintain a constant distance in relation to the first axial pipe 18.

The second axial pipe 22 forms, in relation to the first axial pipe 18, a first axial channel 23 through which a compressed air flow F1 circulates.

The rear end of the fist pipe 18 has an air connector ring 25, which incorporates an inlet terminal 26 that receives the assembly of a pipe (not illustrated) that feeds the first axial channel 23.

The first axial channel 23 is closed by an air sealer 27 that, assembled around the second axial pipe 22, closes the rear border of the air-connecting ring 25.

The front end of the first axial pipe 18 receives the assembly of the cylindrical body 28, which analogically has the format of a torpedo.

The so-called torpedo 28 serves as a mobile body along which the air flow F1 travels, thus creating a positive pressure chamber C that acts outwards from inside the pipe T, forcing the material of said pipe against the inner surface of the molding blocks 24 that form the molding chamber M.

Therefore, the material of pipe T, in addition to being forced to take the shape of the molding blocks 24, is progressively cooled by the same airflow F1 that determines the creation of the positive pressure chamber C, thus ensuring that said pipe T can obtain the final corrugated shape on leaving the equipment.

This equipment operates according to a principle totally different from the one usually employed, that is, it does not operate by vacuum.

The fact of its not using vacuum as the means of forcing the pipe T to come in contact with the inner surface of the molding blocks 24 makes the molding of pipe T substantially more efficient, since the positive pressure chamber C is created inside the pipe T, and makes use of the latter's hermetical nature.

This case does not present the same problem identified in prior art, since the molding blocks 24 do not have to be produced and assembled in a manner as to create a hermetic juxtaposition.

The technical solution based on the creation of the positive pressure chamber C is substantially simpler and has a general cost of feasibility that is much cheaper compared with that in prior art.

The torpedo 28 is formed by a rear terminal 29, to which a tubular sleeve 30 is connected, said tubular sleeve 30 having its front end closed by a front terminal 31.

Between the mouthpiece 32 of the thickness-regulating component 19 and the rear terminal 29 of the torpedo 28, a ring passage 33 is maintained, through which the airflow F1 comes in contact with the extruded pipe T being formed.

The second axial pipe 22 internally receives a third axial pipe 34, which, as occurs with the second axial pipe 22 in relation to the first axial pipe 18, is dimensioned in a way as to maintain a constant distance, thus forming a second axial channel 36 through which a cooling liquid flow F2 circulates in the return direction.

The third axial pipe 34 receives a fourth axial pipe 37 receives in its interior, which is also dimensioned in a way as to maintain a distance in relation to the third axial pipe 34, thus forming a third axial channel 38, that is connected to the second axial channel 36 through the passage points 39 produced at the front end of the axial pipe 34.

The closing of the second axial channel 36 is delimited by a cooling liquid connector 40, which has an inlet terminal 41 and another outlet terminal 42.

The cooling liquid connector 40 receives the assembly in the second axial pipe 22 as well as in the third axial pipe 34.

The cooling liquid connector 40, in conjunction with the second and third axial pipes 22, 32, enable the second and third axial channels 36 and 38 to form a cooling liquid circulating line F2, such that said flow enters the connector 40 from the inlet terminal 41, reaches the third axial channel 38, enters the torpedo 28, crosses the passage points 39, returns through the second axial channel 36 and finally reaches the connector 40, exiting through its outlet terminal 42.

The cooling liquid connector 40, in addition to closing the end of the second and third axial pipes 22 and 34, is also crossed by a fourth axial pipe 37.

The axial pipe 37 internally crosses the third axial pipe 34 and has its front end duly assembled and aligned with the axial channel 43 of the front terminal 31 of the torpedo 28.

The fourth axial pipe 37 serves as a means for passing a guide wire 44 (produced in wire, nylon, or another adequate material), axially crosses the equipment, being positioned along the inner region of the corrugated pipe T.

The guide wire 44 is initially coiled around a coil 45, from which it is uncoiled at the same speed in at which the corrugated pipe T is produced.

Therefore, the corrugated pipe T is produced with an equal length or slightly greater length of the guide wire 44 in its interior.

The corrugated pipe T is then sold together with the corresponding guide wire 44; this facilitates the later passing of cables through the pipe T's interior after the pipe has been duly assembled in its place of use.

The supply of corrugated pipe T together with the guide wire 44 represents a significant facility, mainly in the case of corrugated pipes T of great lengths.

The new technical effect of allowing the corrugated pipe T to be produced and fed with the corresponding guide wire 44 was only possible by the provision of the constructiveness that characterizes the coaxial extrusion head block 3.

The coaxial extrusion head block 3 also allowed the implementation of the constructive concept of the torpedo 28, being that said torpedo proves to efficiently aid in the accurate positioning of the recently extruded plastic tubular flow P, allowing it to occupy the molding chamber M.

The torpedo 28 also presents a positive aspect, represented by the fact that it has an efficient cooling system based on the cooling liquid flow F2 that enters and leaves its interior.

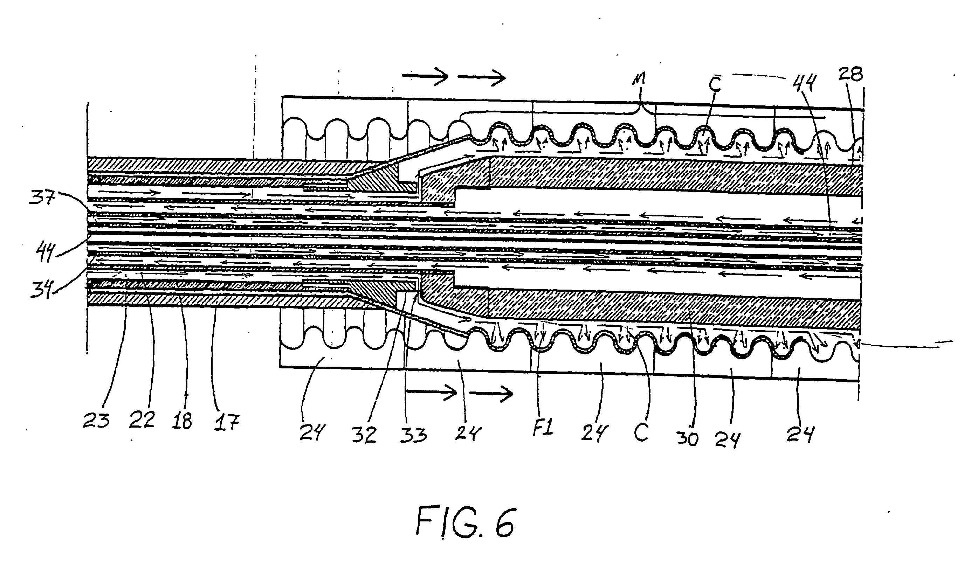

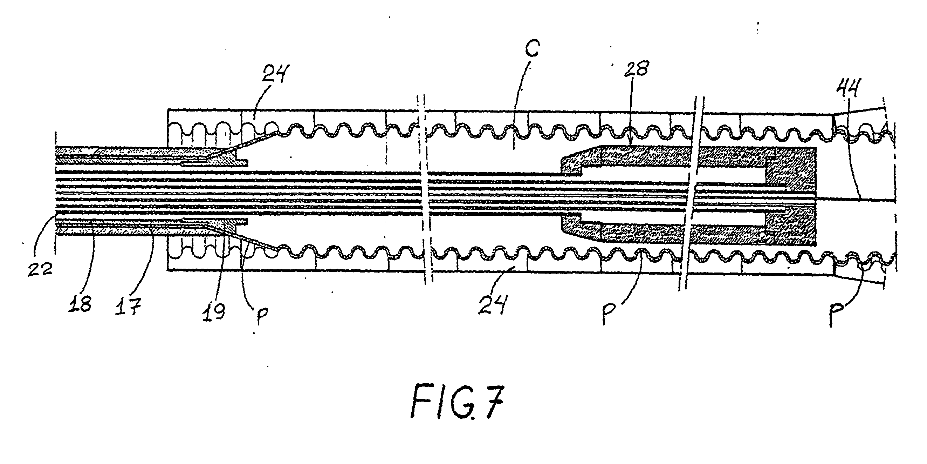

--- The torpedo 28 presents the possibility of moving in the axial direction, a condition that is specifically shown in figures 6 and 7.

At the start of the production of pipe T, the torpedo 28 is positioned near the exit of the plastic pipe T, as shown in figure 6.

As the pipe T is being extruded, the torpedo 28 progressively advances, following the initial section of the pipe T, thus ensuring that the positive pressure chamber C also extends along with the advancement of pipe T.

The torpedo 28 reaches its final course near the region where the molding blocks 24 begin the separating motion, as shown in figure 7.

The beginning of pipe T, on reaching said region that corresponds to the point of separation of the molding blocks 24, has already reached its ideal point of resistance and cooling.

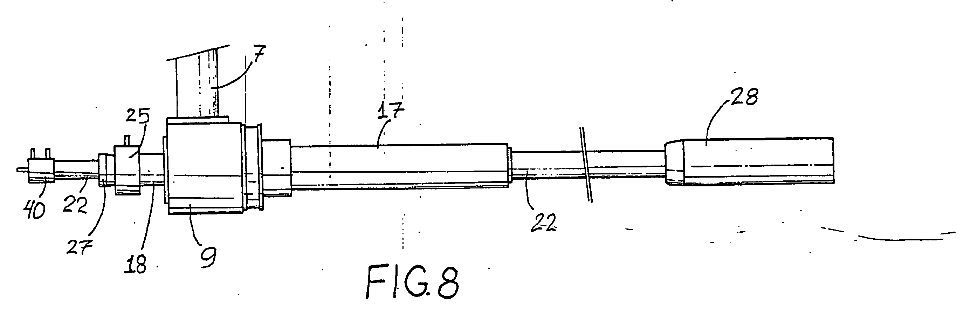

Figure 8 shows the torpedo 28 and the components directly related to it, enabling one to view the constructiveness of this equipment in this case.

## Claims

1. "PIPE-CORRUGATING EQUIPMENT", of the type used for production of corrugated pipes (T) and comprising an extruder (2) that operates in synchrony with a corrugating equipment (1), wherein the extruder (2) that is part of the corrugating equipment (1) incorporates a coaxial extrusion head block (3); the coaxial extrusion head block (3) is assembled from a frontal head (4), which has a transversal channel (5) that at one end receives a closing component (6) and at the other end receives the flow deviation pipe (7), **characterized by** the fact that the opposite end of the flow deviation pipe (7) receives the assembly of a filter guide cone (8), which is duly assembled on the lateral head (9) of the coaxial extrusion head block (3); the lateral head (9) receives the assembly of a strangling cone (10), this component being duly aligned with the longitudinal geometrical axis of the equipment as a whole; the strangling cone (10) has a ring shoulder (11), which is aligned with the channel (12) of the filter cone guide (8) such that the flow of the plastic material (P), coming from the extruder (2) and that first passes through the frontal head (4) and then through the flow deviation pipe (7), envelops said strangling one (10) in a tubular form; the strangling cone (10), from the ring shoulder (11) and in direction of the flow (P) of the extruded plastic material, incorporates a passage region (13) formed by a series of ring shoulders (14), said passage region (13) maintaining a constant distance in relation to the inner wall of the cavity (15) of the lateral head (9), through which the plastic flow (P) passes; the strangling cone (10) incorporates a frontal projection (16) that internally advances in direction of the female block (17), also maintaining, in relation to the channel of said component, a constant distance that enables the passage of the plastic flow (P); the strangling cone (10) receives the close-fitting assembly of a first axial pipe (18), whose front end exceeds said strangling cone (10), internally passes through the female block (17) and finally receives the assembly of a thickness-regulating component (19); the thickness-regulating component (19), in conjunction with the outlet mouthpiece (20) of the end of the female block (17), determines the thickness of the plastic tubular flow (P), which is determined from the nearness or distance of thickness-regulating component (19) in relation to said outlet mouthpiece (20); the first axial pipe (18) is assembled in such a way that, from the end of the strangling cone (10), a distance is maintained in relation to the axial channel (21) of the female block (17); the first axial pipe (18) receives a second axial pipe (22) in its interior, the latter being dimensioned in a way as to maintain a constant distance in relation to the first axial pipe (18); the second axial pipe (22) forms in relation to the first axial pipe (18) a first axial channel (23) through which a flow (F1) of compressed air circulates; the rear end of the first pipe (18) has an air connecting ring (25) that incorporates an inlet terminal (26), which receives the assembly of a
pipe that feeds the first axial channel (23); the first axial channel (23) is closed by an air sealer (27) which, assembled around the second axial pipe (22), closes the rear border of the air connecting ring (25); the front end of the first axial pipe (18) receives an assembly of a cylindrical body (28), analogically denominated as torpedo; a second axial pipe (22) internally receives a third axial pipe (34) which, as occurs with the second axial pipe (22) in relation to the first axial pipe (18), is dimensioned in a way as to maintain a constant distance, thus forming a second axial channel (36) through which a cooling liquid flow (F2) circulates in the return direction; the third axial pipe (34) receives a fourth axial pipe (37) in its interior, which is dimensioned in a way as to maintain a distance in relation to the third axial pipe (34), thus forming a third axial channel (38) that is connected to the second axial channel (36) through the points of passage (39) produced at the front end of the third axial pipe (34); the closing of the second axial pipe (22) is delimited by a cooling liquid connector (40), which has an inlet terminal (41) and an outlet terminal (42); the cooling liquid connector (40) receives the assembly of the second axial pipe (22) as well as of the third axial pipe (34); the cooling liquid connector (40), in conjunction with the second and third axial pipes (22) and (32), enables the second and third axial channels (36) and (38) to form a cooling liquid flow circulation line (F2), in such a way that said flow enters the connector (40) from its inlet terminal (41), reaches the third axial channel (38), enters the torpedo (28), crosses the passage points (39), returns through the second axial channel (36) and finally reaches the connector (40), then exiting from its outlet terminal (42); the cooling liquid connector (40), in addition to closing the end of the second and third axial pipes (22) and (34), is also crossed by a fourth axial pipe (37); the axial pipe (37) internally crosses the third axial pipe (34) and has its front end duly assembled and aligned with the axial channel (43) of the front terminal (31) of the torpedo (28), wherein the cylindrical body (28) serves as a mobile body along which the air flow (F1) moves, thus creating a positive pressure chamber (C) that acts outwards from inside the pipe (T), forcing the material of said pipe against the inner surface of the molding blocks (24) that form the molding chamber (M), the fourth axial pipe (37) serves as a means of passing a guide wire (44), which crosses the equipment axially, being positioned along the inner region of the corrugated pipe (T) and the guide wire (44) is initially coiled around a coil (45), from which it is uncoiled at the same speed at which the corrugated pipe (T) is produced.

2. "PIPE-CORRUGATING EQUIPMENT", according to the claim in 1, **characterized by** the fact that the airflow (F1), in addition to acting on the pipe (T), causing it to be forced to take the shape of the molding blocks (24), also acts in the cooling of said pipe (T).

3. "PIPE-CORRUGATING EQUIPMENT", according to the claim 1, **characterized by** the fact that the torpedo (28) is formed by a rear terminal (29), to which the end of a tubular sleeve (30) is connected, the front end of said tubular sleeve (30) being closed by front terminal (31).

4. "PIPE-CORRUGATING EQUIPMENT", according to claim 1, **characterized by** the fact that a ring passage (33), through which the airflow (F1) comes in contact with extruded pipe (T) being formed, is maintained between the mouthpiece (32) of the thickness-regulating component (19) and the rear terminal (29) of the torpedo (28).

5. "PIPE-CORRUGATING EQUIPMENT", according to claim 1, **characterized by** the fact that the torpedo (28) enables axial motion.

6. "PIPE-CORRUGATING EQUIPMENT", according to claim 1 and 5, **characterized by** the fact that at the start of production of the pipe (T), the torpedo (28) is positioned near the exit of the plastic pipe (T) and, as the pipe (T) is extruded, the torpedo (28) progressively advances, following the initial section of the pipe (T), ensuring that the positive pressure chamber (C) is also extended following the advancement of the pipe (T); the torpedo (28) reaches the end of its course near the region where the molding blocks (24) begin the distancing motion.

## Patentansprüche

1. Rohrwellungsanlage der Art, die zur Herstellung von Wellrohren (T) verwendet wird und einen Extruder (2) aufweist, der synchron mit einer Wellungsanlage (1) betrieben wird, wobei der Extruder (2), der Teil der Wellungsanlage (1) ist, einen Spritzkopf (3) zur koaxialen Extrusion beinhaltet; wobei der Spritzkopf (3) zur koaxialen Extrusion aus einem Stirnkopf (4) zusammengesetzt ist, der einen Querkanal (5) aufweist, der an einem Ende eine verschließende Komponente (6) aufnimmt und an dem anderen Ende das Strömungsumleitungsrohr (7) aufnimmt, **dadurch gekennzeichnet, dass** das entgegengesetzte Ende des Strömungsumleitungsrohrs (7) die Anordnung eines Filterführungskegels (8) aufnimmt, die ordnungsgemäß auf den Querkopf (9) des Spritzkopfs (3) zur koaxialen Extrusion aufgesetzt ist; der Querkopf (9) die Anordnung eines Einschnürungskegels (10) aufnimmt, wobei diese Komponente ordnungsgemäß auf die geometrische Längsachse der Anlage als Ganzes ausgerichtet ist; wobei der Einschnürungskegel (10) einen Ringabsatz (11) hat, der auf den Kanal (12) des Filterführungskegels (8) ausgerichtet ist, so dass der Strom den Kunststoffmaterials (P), der von dem Extruder (2) kommt und der zuerst durch den Stirnkopf (4) und dann durch das Strömungsumleitungsrohr (7) gelangt, den Einschnürungskegel (10) in einer Rohrform umgibt; der Einschnürungskegel (10) von dem Ringabsatz (11) und in Richtung des Stroms (P) des extrudierten Kunststoffmaterials einen Durchgangsbereich (13) beinhaltet, der aus einer Reihe von Ringabsätzen (14) ausgebildet ist, wobei der Durchgangsbereich (13) im Verhältnis zur Innenwandung des Hohlraums (15) des Querkopfs (9) einen konstanten Abstand aufrechterhält, durch den der Kunststoffstrom (P) gelangt; der Einschnürungskegel (10) einen vorderen Fortsatz (16) aufweist, der innerlich in der Richtung des weiblichen Blocks (17) vorsteht, der im Verhältnis zu dem Kanal der Komponente ebenfalls einen konstanten Abstand aufrechterhält, der das Hindurch-Gelangen des Kunststoffstroms (P) erlaubt; der Einschnürungskegel (10) die eng anliegende Anordnung eines ersten axialen Rohrs (18) aufnimmt, dessen vorderes Ende über den Einschnürungskegel (10) hinaus geht, innen durch den weiblichen Block (17) gelangt und schließlich die Anordnung einer Dickenregulierungskomponente (19) aufnimmt; die Dickenregulierungskomponente (19) im Zusammenwirken mit dem Auslassmundstück (20) des Endes des weiblichen Blocks (17) die Dicke des rohrförmigen Kunststoffstroms (P) bestimmt, die durch die Nähe bzw. Entfernung der Dickenregulierungskomponente (19) im Verhältnis zu dem Auslassmundstück (20) bestimmt wird; das erste axiale Rohr (18) in einer solchen Weise zusammengesetzt ist, dass von dem Ende des Einschnürungskegels (10) ein Abstand im Verhältnis zum axialen Kanal (21) des weiblichen Blocks (17) aufrechterhalten wird; das erste axiale Rohr (18) ein zweites axiales Rohr (22) in seinem Inneren aufnimmt, wobei das Letztere so abgemessen ist, dass im Verhältnis zum ersten axialen Rohr (18) ein konstanter Abstand aufrechterhalten wird; das zweite axiale Rohr (22) im Verhältnis zum ersten axialen Rohr (18) einen ersten axialen Kanal (23) bildet, durch den ein Strom (F1) komprimierter Luft zirkuliert; das hinteren Ende des ersten Rohrs (18) einen Luftanschlussring (25) hat, der einen Einlassanschluss (26) beinhaltet, der die Anordnung eines Rohrs aufnimmt, das den ersten axialen Kanal (23) versorgt; der erste axiale Kanal (23) von einer Luftdichtung (27) verschlossen ist, die um das zweite axiale Rohr (22) herum montiert die hintere Grenze des Luftanschlussrings (25) verschließt; das vordere Ende des ersten axialen Rohrs (18) eine Anordnung eines zylindrischen Körpers (28) aufnimmt, der analog als Torpedo bezeichnet wird; ein zweites axiales Rohr (22) innerlich ein drittes axiales Rohr (34) aufnimmt, das wie auch im Fall des zweiten axialen Rohrs (22) im Verhältnis zum ersten axialen Rohr (18) in einer Weise abgemessen ist, dass ein konstanter Abstand aufrechterhalten wird, wodurch ein zweiter axialer Kanal (36) gebildet wird, durch den in der Rückrichtung ein Kühlflüssigkeitsstrom (F2) zirkuliert; das dritte axiale Rohr (34) ein viertes axiales Rohr (37) in seinem Inneren aufnimmt, das in einer Weise abgemessen ist, dass im Verhältnis zum dritten axialen Rohr (34) ein Abstand aufrechterhalten wird, wodurch ein dritter axialer Kanal (38) gebildet wird, der über Durchlässe (39), die am vorderen Ende des dritten axialen Rohrs (34) ausgebildet sind, mit dem zweiten axialen Kanal (36) verbunden ist; der Verschluss des zweiten axialen Rohrs (22) durch einen
Kühlflüssigkeitsanschluss (40) begrenzt ist, der einen Einlassanschluss (41) und einen Auslassanschluss (42) hat; wobei der Kühlflüssigkeitsanschluss (40) die Anordnung des zweiten axialen Rohrs (22) sowie des dritten axialen Rohrs (34) aufnimmt; der Kühlflüssigkeitsanschluss (40) zusammen mit dem zweiten und dem dritten axialen Rohr (22) bzw. (32) es dem zweiten und dem dritten axialen Kanal (36) bzw. (38) ermöglicht, eine Kühlflüssigkeits-Zirkulationsleitung (F2) in einer solchen Weise zu bilden, dass der Strom über den Einlassanschluss (41) in den Anschluss (40) eintritt, den dritten axialen Kanal (38) erreicht, in den Torpedo (28) eintritt, durch die Durchlässe (39) gelangt, durch den zweiten axialen Kanal (36) zurückkehrt und schließlich den Anschluss (40) erreicht, dann über seinen Auslassanschluss (42) austritt; der Kühlflüssigkeitsanschluss (40) zusätzlich zum Verschließen des Endes des zweiten und dritten axialen Rohrs (22) bzw. (34) auch von einem vierten axialen Rohr (37) durchquert wird; das axiale Rohr (37) innerlich das dritte axiale Rohr (34) durchquert und dessen vorderes Ende ordnungsgemäß mit dem axialen Kanal (43) des vorderen Anschlusses (31) des Torpedos (28) zusammengesetzt und ausgerichtet ist, wobei der zylindrische Körper (28) als ein beweglicher Körper dient, entlang dessen sich der Luftstrom (F1) bewegt, wodurch eine Überdruckkammer (C) geschaffen wird, die vom Inneren des Rohrs (T) aus nach außen wirkt, wodurch das Material des Rohrs gegen die Innenoberfläche der Formbacken (24) gedrückt wird, welche die Formungskammer (M) bilden, das vierte axiale Rohr (37) als ein Mittel zum Hindurchführen eines Führungsdrahts (44) dient, der die Anlage axial durchquert, wobei er entlang des inneren Bereichs des Wellrohrs (T) angeordnet ist, und der Führungsdraht (44) anfangs auf eine Spule (45) gewickelt ist, von der er mit der gleichen Geschwindigkeit abgewickelt wird, mit der auch das Wellrohr (T) hergestellt wird.

2. Rohrwellungsanlage nach Anspruch 1, **dadurch gekennzeichnet, dass** der Luftstrom (F1) zusätzlich dazu, dass er auf das Rohr (T) einwirkt, wobei er bewirkt, dass es zwangsweise die Form der Formbacken (24) annimmt, auch die Kühlung des Rohrs (T) bewirkt.

3. Rohrwellungsanlage nach Anspruch 1, **dadurch gekennzeichnet, dass** der Torpedo (28) von einem hinteren Anschluss (29) gebildet wird, mit dem das Ende einer rohrförmigen Manschette (30) verbunden ist, wobei das vordere Ende der rohrförmigen Manschette (30) von dem vorderen Anschluss (31) verschlossen wird.

4. Rohrwellungsanlage nach Anspruch 1, **dadurch gekennzeichnet, dass** ein Ringdurchgang (33), über den der Luftstrom (F1) mit dem stranggepressten Rohr (T), das geformt wird, in Kontakt kommt, zwischen dem Mundstück (32) der Dickenregulierungskomponente (19) und dem hinteren Anschluss (29) des Torpedos (28) aufrechterhalten wird.

5. Rohrwellungsanlage nach Anspruch 1, **dadurch gekennzeichnet, dass** der Torpedo (28) eine axiale Bewegung ermöglicht.

6. Rohrwellungsanlage nach Anspruch 1 und 5, **dadurch gekennzeichnet, dass** am Beginn der Herstellung des Rohrs (T) der Torpedo (28) in der Nähe des Ausgangs des Kunststoffrohrs (T) angeordnet wird und während des Strangpressens des Rohrs (T) der Torpedo (28), dem Anfangsteil des Rohrs (T) folgend, fortschreitend vorgeschoben wird, wodurch sichergestellt wird, dass die Überdruckkammer (C) dem Vorschieben des Rohrs (T) folgend ebenfalls erweitert wird; der Torpedo (28) das Ende seines Laufs in der Nähe des Bereichs erreicht, in dem die Formbacken (24) die Entfernungsbewegung beginnen.

## Revendications

1. Equipement destiné à onduler des tuyaux, du type utilisé pour une production de tuyaux ondulés (T) et comprenant une extrudeuse (2) qui fonctionne en synchronisme avec un équipement d'ondulation (1), dans lequel l'extrudeuse (2) qui fait partie de l'équipement d'ondulation (1) intègre un bloc de tête d'extrusion coaxial (3), le bloc de tête d'extrusion coaxial (3) étant assemblé à partir d'une tête frontale (4), qui comporte un canal transversal (5) qui, à une première extrémité, reçoit un composant de fermeture (6) et, à l'autre extrémité, reçoit le tuyau de déviation d'écoulement (7), **caractérisé par le fait que** l'extrémité opposée du tuyau de déviation d'écoulement (7) reçoit l'ensemble d'un cône de guidage de filtre (8), qui est dûment assemblé sur la tête latérale (9) du bloc de tête d'extrusion coaxial (3), la tête latérale (9) reçoit l'ensemble d'un cône d'étranglement (10), ce composant étant dûment aligné avec l'axe géométrique longitudinal de l'équipement dans son ensemble ; le cône d'étranglement (10) comporte un épaulement circulaire (11), qui est aligné avec le canal (12) du cône de guidage de filtre (8) de telle sorte que l'écoulement de la matière plastique (P), provenant de l'extrudeuse (2) et qui traverse tout d'abord la tête frontale (4) et traverse ensuite le tuyau de déviation d'écoulement (7), enveloppe ledit cône d'étranglement (10) dans une forme tubulaire ; le cône d'étranglement (10), à partir de l'épaulement circulaire (11) et dans la direction de l'écoulement (P) de la matière plastique extrudée, intègre une zone de passage (13) formée par une série d'épaulements circulaires (14), ladite zone de passage (13) conservant une distance constante par rapport à la paroi intérieure de la cavité (15) de la tête latérale (9), à travers laquelle l'écoulement de matière plastique (P) passe ; le cône d'étranglement (10) intègre une protubérance frontale (16) qui dépasse de façon interne en direction du bloc femelle (17), conservant également, par rapport au canal dudit composant, une distance constante qui permet le passage de l'écoulement de matière plastique (P) ; le cône d'étranglement (10) reçoit l'ensemble avec ajustement sans jeu d'un premier tuyau axial (18), dont l'extrémité avant dépasse dudit cône d'étranglement (10), traverse de façon interne le bloc femelle (17) et reçoit finalement l'ensemble d'un composant de régulation d'épaisseur (19) ; le composant de régulation d'épaisseur (19), en association avec l'embouchure de sortie (20) de l'extrémité du bloc femelle (17), détermine l'épaisseur de l'écoulement tubulaire de matière plastique (P), qui est déterminée à partir de la proximité ou de la distance du composant de régulation d'épaisseur (19) par rapport à ladite embouchure de sortie (20) ; le premier tuyau axial (18) est assemblé de telle manière que, depuis l'extrémité du cône d'étranglement (10), une distance est conservée par rapport au canal axial (21) du bloc femelle (17) ; le premier tuyau axial (18) reçoit un deuxième tuyau axial (22) dans sa partie intérieure, ce dernier étant dimensionné de telle manière à conserver une distance constante par rapport au premier tuyau axial (18) ; le deuxième tuyau axial (22) forme par rapport au premier tuyau axial (18) un premier canal axial (23) à travers lequel un écoulement (F1) d'air comprimé circule ; l'extrémité arrière du premier tuyau (18) comporte une bague de raccord pneumatique (25) qui incorpore un terminal d'entrée (26), qui reçoit l'ensemble d'un tuyau qui alimente le premier canal axial (23) ; le premier canal axial (23) est fermé par un dispositif d'étanchéité à l'air (27) qui, lorsqu'il est monté autour du deuxième tuyau axial (22), ferme la bordure arrière de la bague de raccord pneumatique (25) ; l'extrémité avant du premier tuyau axial (18) reçoit un montage d'un corps cylindrique (28), désigné par analogie par torpille ; un deuxième tuyau axial (22) reçoit à l'intérieur un troisième tuyau axial (34) qui, comme cela se produit avec le deuxième tuyau axial (22) par rapport au premier tuyau axial (18), est dimensionné de manière à conserver une distance constante, en formant donc un deuxième canal axial (36) à travers lequel un écoulement de liquide de refroidissement (F2) circule dans le sens inverse ; le troisième tuyau axial (34) reçoit un quatrième tuyau axial (37) dans sa partie intérieure, qui est dimensionné de manière à conserver une distance par rapport au troisième tuyau axial (34), en formant ainsi un troisième canal axial (38) qui est raccordé au deuxième canal axial (36) par l'intermédiaire des points de passage (39) créés à l'extrémité avant du troisième tuyau axial (34) ; la fermeture du deuxième tuyau axial (22) est délimitée par un raccord pour liquide de refroidissement (40), qui comporte un terminal d'entrée (41) et un terminal de sortie (42) ; le raccord pour liquide de refroidissement (40) reçoit l'ensemble du deuxième tuyau axial (22) de même que celui du troisième tuyau axial (34) ; le raccord pour liquide de refroidissement (40), en association avec les deuxième et troisième tuyaux axiaux (22) et (32), permet aux deuxième et troisième canaux axiaux (36) et (38) de former une conduite de circulation d'écoulement de liquide de refroidissement (F2), de telle manière que ledit écoulement pénètre dans le raccord (40) depuis son terminal d'entrée (41), atteint le troisième canal axial (38), entre dans la torpille (28), traverse les points de passage (39), revient à travers le deuxième canal axial (36) et atteint finalement le raccord (40), en sortant ensuite par son terminal de sortie (42) ; le raccord pour liquide de refroidissement (40), en plus de fermer l'extrémité des deuxième et troisième canaux axiaux (22) et (34), est également traversé par un quatrième tuyau axial (37) ; le tuyau axial (37) traverse à l'intérieur le troisième tuyau axial (34) et a son extrémité avant dûment assemblée et alignée avec le canal axial (43) du terminal avant (31) de la torpille (28), le corps cylindrique (28) servant de corps mobile le long duquel l'écoulement d'air (F1) se déplace, en créant ainsi une chambre à pression positive (C) qui agit vers l'extérieur depuis l'intérieur du tuyau (T), en forçant le matériau dudit tuyau contre la surface intérieure des blocs de moulage (24) qui forment la chambre de moulage (M), le quatrième tuyau axial (37) sert de moyen de passage d'un fil de guidage (44), qui traverse l'équipement axialement, en étant positionné le long de la région intérieure du tuyau ondulé (T) et le fil de guidage (44) est enroulé initialement autour d'une bobine (45), à partir de laquelle il est déroulé à la même vitesse que la vitesse à laquelle le tuyau ondulé (T) est produit.

2. Equipement d'ondulation de tuyau, selon la revendication 1, **caractérisé par le fait que** l'écoulement d'air (F1), en plus d'agir sur le tuyau (T), l'amenant à être contraint d'adopter la forme des blocs de moulage (24), agit également sur le refroidissement dudit tuyau (T).

3. Equipement d'ondulation de tuyau, selon la revendication 1, **caractérisé par le fait que** la torpille (28) est formée par un terminal arrière (29), auquel l'extrémité d'un manchon tubulaire (30) est raccordée, l'extrémité avant dudit manchon tubulaire (30) étant fermée par le terminal avant (31).

4. Equipement d'ondulation de tuyau, selon la revendication 1, **caractérisé par le fait qu'**un passage annulaire (33), à travers lequel l'écoulement d'air (F1) vient en contact avec le tuyau extrudé (T) qui est formé, est conservé entre l'embouchure (32) du composant de régulation d'épaisseur (19) et le terminal arrière (29) de la torpille (28).

5. Equipement d'ondulation de tuyau, selon la revendication 1, **caractérisé par le fait que** la torpille (28) permet un déplacement axial.

6. Equipement d'ondulation de tuyau, selon les revendications 1 et 5, **caractérisé par le fait qu'**au début de la production du tuyau (T), la torpille (28) est positionnée près de la sortie du tuyau en matière plastique (T) et, pendant que le tuyau (T) est extrudé, la torpille (28) avance progressivement, suivant la section initiale du tuyau (T), en garantissant que la chambre à pression positive (C) est également étendue suivant la progression du tuyau (T) ; la torpille (28) atteint l'extrémité de sa course près de la région où les blocs de moulage (24) commencent le déplacement d'écartement.
